# EUROPEAN PATENT SPECIFICATION

(11) **EP 3 425 958 B1**
(45) Date of publication and mention of the grant of the patent: **02.09.2020**
(21) Application number: 16895910.4
(22) Date of filing: 30.03.2016
(51) Int. Cl.: H04W 36/00, H04W 72/04

(54) **BEARER SWITCHING METHOD, BASE STATION APPARATUS, AND NETWORK NODE**
TRÄGERUMSCHALTVERFAHREN, BASISSTATIONSVORRICHTUNG UND NETZWERKKNOTEN
PROCÉDÉ DE COMMUTATION DE PORTEUSE, APPAREIL DE STATION DE BASE ET NOEUD DE RÉSEAU

(43) Date of publication of application: 09.01.2019
(73) Proprietor: Huawei Technologies Co., Ltd., Longgang District Shenzhen, Guangdong 518129 (CN)
(72) Inventor: LI, Mingchao, Shenzhen Guangdong 518129 (CN); WANG, Yan, Shenzhen Guangdong 518129 (CN); CAO, Zhenzhen, Shenzhen Guangdong 518129 (CN); HAN, Guanglin, Shenzhen Guangdong 518129 (CN)
(74) Representative: Maiwald Patent- und Rechtsanwaltsgesellschaft mbH
(86) International application number: PCT/CN2016/077884
(87) International publication number: WO 2017/166129

(56) References cited:
- WO-A1-2015/027927
- WO-A1-2015/030557
- CN-A- 104 335 666
- CN-A- 105 101 154
- US-A1- 2013 315 079
- US-A1- 2013 324 114
- US-A1- 2014 162 633
- US-A1- 2015 271 733
- US-A1- 2015 282 236

## Description

### TECHNICAL FIELD

The present invention relates to the field of communications technologies, and in particular, to a bearer handover method, a base station device, and a network node.

### BACKGROUND

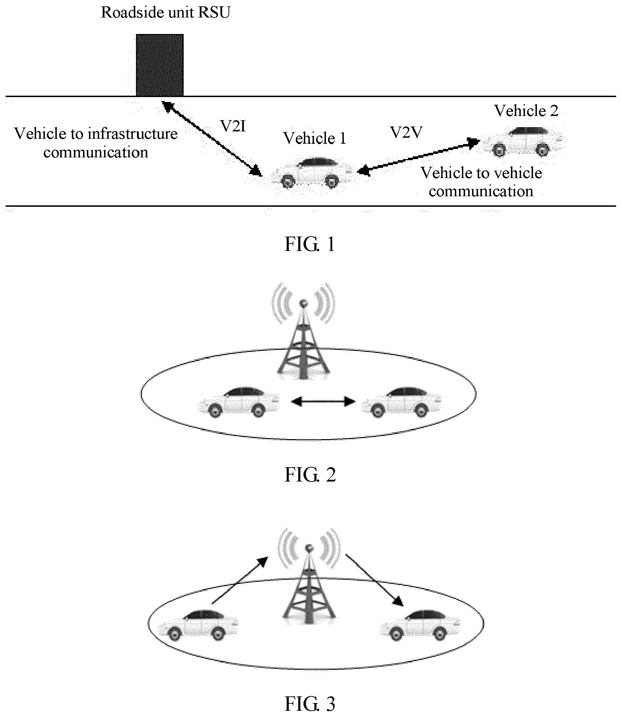

Currently, a vehicle may promptly obtain road condition information or receive service information through vehicle to vehicle (V2V) communication or vehicle to infrastructure (V2I) communication or vehicle to pedestrian (V2P) communication or vehicle to network (V2N) communication. These communication modes may be collectively referred to as V2X communication (where X represents everything). In a schematic diagram of V2V/V2I communication shown in FIG. 1, a vehicle may broadcast information about the vehicle such as a driving speed, a driving direction, a specific location, and abrupt deceleration to a surrounding vehicle through V2V communication, so that a driver obtaining the information can better determine a traffic condition outside a line of sight, to predict a danger and further avoid the danger. For V2I communication, in addition to interaction of the foregoing security information, a roadside infrastructure may further provide various service information and data network access for the vehicle, and functions such as electronic toll collection and intra-vehicle entertainment can greatly improve traffic intelligence. A network used for V2X communication is Internet of Vehicles.

LTE is a current mainstream wireless communications technology. A terminal direct communication (D2D) technology is used as an important feature and is standardized, and supports direct communication between user terminals. Considering that some V2X service (for example, V2V/V2I) communication scenarios also belong to terminal direct communication, in a schematic communication diagram shown in FIG. 2 in which a V2X message is transmitted through terminal direct communication, a V2X service may be transmitted by using the D2D technology. However, sometimes, due to blocking of a building (such as a crossroad) or because a vehicle needs to broadcast a message further, in a schematic communication diagram shown in FIG. 3 in which a V2X message is transmitted by using a base station, a vehicle may transmit information to the base station and then the base station transmits the information to another vehicle to implement communication between vehicles. A direct communication interface between the vehicle and a surrounding terminal may be a PC5 interface, and an interface between the vehicle and the base station may be referred to as a Uu interface. Therefore, the network needs to perform configuration based on a network status, a UE service requirement, or other conditions, so that the UE dynamically switches between a base station relay mode and a direct communication mode.

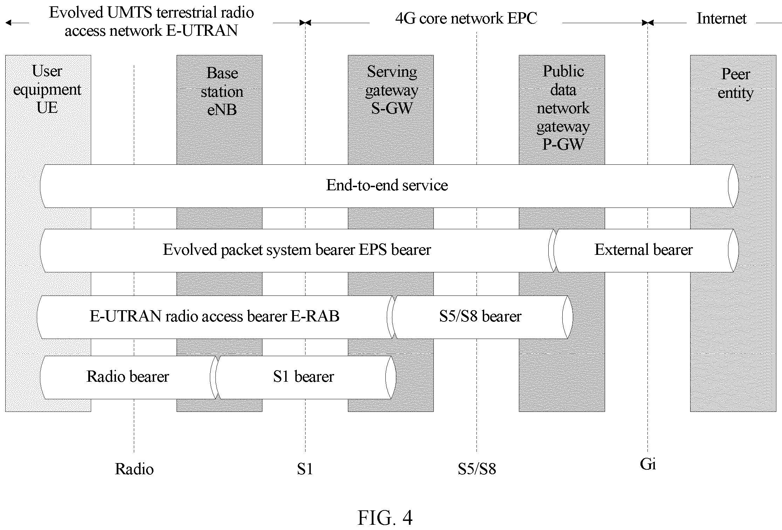

In the prior art, when user equipment (UE) transmits data by using a base station, a network establishes different evolved packet system (EPS) bearers for the UE between the UE and a public data network gateway (P-GW) based on different quality of service (QoS) requirements of the UE, to transmit different services by using these different EPS bearers. In a schematic diagram of a bearer shown in FIG. 4, a segment of a bearer between UE and a serving gateway (S-GW) in each EPS bearer is referred to as an evolved UMTS terrestrial radio access network radio access bearer (E-RAB), and the E-RAB bearer includes an S1 bearer and a radio bearer.

In application, a user may simultaneously use a V2V service and another service. For example, when transmitting the V2V service by using an E-RAB1, the user simultaneously transmits an online navigation service by using an E-RAB2. When the V2V service of the user needs to be switched from a base station relay mode to a sidelink sending mode, the V2V service needs to be handed over from the E-RAB 1 to a sidelink radio bearer (SLRB), but the other service does not need to be handed over. In this case, only the V2V service needs to be handed over from the E-RAB1 to the SLRB, but the online navigation service is still transmitted on the E-RAB2. In this scenario, for E-RABs, some E-RABs support a handover to a sidelink (or PC5) for transmission, but some E-RABs do not support a handover to the sidelink for transmission.

However, in the prior art, a base station (eNB) cannot identify whether an E-RAB supports a handover to a sidelink radio bearer for transmission, and therefore cannot hand over a handover-supported E-RAB to the sidelink radio bearer for transmission.

WO 2015/027927 A1, according to its post-published family member EP 3 041 describes a switching procedure comprising an access network device determining to switch from a D2N link to a D2D link; sending a switching command to a first terminal and a second terminal; receiving a switching complete response; and saving bearer information of a bearer, which needs to be switched to the D2D link, in the D2N link, or requesting to send a bearer keep request to a core network node.

US 2013/315079 A1 describes a method using D2D communications to support at least a portion of IMS based services. In one example, a first UE is equipped to perform communications with a second UE using an IMS session in which data traffic and signaling traffic are supported through a network, determine that the second UE is within a first proximity threshold of the first UE, establish a D2D communication link with the second UE, and transfer support of the data traffic to the D2D communication link while maintaining the support of the signaling traffic through the network.

US 2015/271733 A1 describes a method comprising receiving, from a network element, a path switch command which is generated when a pair of user equipments in device-to-device communication over a default data path is served by the same base station. The method further comprises switching, based at least in part upon the path switch command, a data path of the pair ofuser equipments in the device-to-device communication from the default data path to an optimized data path. With the claimed inventions, smooth switching could be realized without degradation to the user experience.

US 2015/282236 A1 describes a connection establishment method including acquiring, by a second user equipment supporting a device to device (D2D) function, first user equipment information of a first user equipment supporting the D2D function; and initiating, by the second user equipment, a connection establishment process with a network-side device after the second user equipment determines that a connection with the first user equipment is established according to the first user equipment information, and sending the first user equipment information to the network-side device in the connection establishment process, so that a connection is established between the network-side device and the first user equipment.

### SUMMARY

The invention is defined by the appended independent claims, wherein further embodiments are incorporated in the appended dependent claims. Embodiments of the present invention provide a bearer handover method, a base station device, and a network node, to promptly and accurately identify a bearer that is to be handed over to a sidelink.

According to a first aspect, a bearer handover method is provided, including: receiving, by a first base station, first information sent by a network node, where the first information includes a first bearer identifier and dedicated information, and the dedicated information is used to indicate that a first bearer corresponding to the first bearer identifier supports a handover to a sidelink radio bearer.

In this implementation, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately hand over a handover-supported E-UTRAN radio access bearer to the sidelink radio bearer for transmission based on the information.

With reference to the first aspect, the method further includes: instructing, by the first base station based on the first bearer identifier and the dedicated information, user equipment to hand over the first bearer to the sidelink radio bearer.

In this implementation, the base station can promptly and accurately instruct, based on the received bearer identifier and the received dedicated information, the user equipment to hand over the handover-supported E-UTRAN radio access bearer to the sidelink radio bearer for transmission.

With reference to the first aspect, the dedicated information includes one or more pieces of the following information: a dedicated quality of service class identifier QCI, a dedicated allocation and retention priority ARP identifier, and a service identifier, and the service identifier is an identifier of a service that supports a handover to the sidelink radio bearer.

The dedicated information is an explicit indication information that is used to explicitly indicate that the bearer corresponding to the bearer identifier supports a handover to the sidelink radio bearer.

With reference to the first aspect, in an example that is not covered by the claims, the dedicated information is an implicit indication, and the implicit indication is included in the first information or configuration information of the first bearer.

In this implementation, the dedicated information may be implicit indication information that is used to implicitly indicate that the bearer corresponding to the bearer identifier supports a handover to the sidelink radio bearer, so that signaling resources can be saved.

With reference to the first aspect, in yet another possible design, the first bearer includes a data radio bearer, an evolved UMTS terrestrial radio access network radio access bearer E-RAB, an evolved packet system EPS bearer, or an S1 bearer.

In this implementation, the bearer may be an entire bearer or a segment of a bearer.

With reference to the first aspect, in still yet another possible design, the first bearer identifier includes an E-RAB identifier.

In this implementation, the bearer identifier is preferably the E-RAB identifier.

With reference to the first aspect, the network node includes a mobility management entity MME or a second base station.

In this implementation, the information including the bearer identifier and the dedicated information may be from the MME or another base station, and there are diversified implementations.

With reference to the first aspect, in a still further possible design, the network node is the MME, the first information further includes a handover instruction, and the instructing, by the first base station based on the first bearer identifier and the dedicated information, user equipment to hand over the first bearer to the sidelink radio bearer includes: instructing, by the first base station according to the handover instruction, the first bearer identifier, and the dedicated information, the user equipment to hand over the first bearer corresponding to the first bearer identifier to the sidelink radio bearer.

In this implementation, the MME may determine a handover moment. The base station instructs, according to the handover instruction, the bearer identifier, and the dedicated information that are from the MME, the user equipment to hand over the bearer corresponding to the bearer identifier to the sidelink radio bearer.

With reference to the first aspect, in a yet further possible design, the network node is the second base station, and the instructing, by the first base station based on the first bearer identifier and the dedicated information, user equipment to hand over the first bearer to the sidelink radio bearer includes: determining, by the first base station based on the first bearer identifier and the dedicated information, that the first bearer supports a handover to the sidelink radio bearer; and sending, by the first base station, second information to the second base station, where the second information includes the first bearer identifier and configuration information of the sidelink radio bearer, so that the second base station determines that the first bearer supports a handover to the sidelink radio bearer, and sends the configuration information of the sidelink radio bearer to the user equipment, and the user equipment hands over the first bearer to the sidelink radio bearer based on the configuration information of the sidelink radio bearer.

In this implementation, the first base station instructs the second base station to control the user equipment to hand over the bearer corresponding to the bearer identifier to the sidelink radio bearer.

With reference to the first aspect, in a still yet further possible design, after the instructing, by the first base station based on the first bearer identifier and the dedicated information, user equipment to hand over the first bearer to the sidelink radio bearer, the method further includes: sending, by the first base station, request information to the MME, where the request information carries the first bearer identifier, and the first bearer identifier is used by the MME to release an E-RAB bearer, an EPS bearer, or an S1 bearer on a core network side based on the first bearer identifier.

In this implementation, after the bearer handover is completed, the MME is requested to release resources occupied by the bearer before the handover, so that communication resources can be effectively utilized.

With reference to the first aspect, in an even yet another possible design, before the receiving, by a first base station, first information sent by a first network node, the method further includes: sending, by the first base station, third information to the user equipment, where the third information is used to instruct the user equipment to perform data transmission in a base station relay mode.

In this implementation, the base station may further instruct, by using the information, the user equipment to perform data transmission in a base station relay mode.

According to a second aspect, a bearer handover method is provided, including: sending, by a network node, first information to a first base station, where the first information includes a first bearer identifier and dedicated information, and the dedicated information is used to indicate that a first bearer corresponding to the first bearer identifier supports a handover to a sidelink radio bearer.

With reference to the second aspect, in a possible design, the dedicated information includes one or more pieces of the following information: a dedicated quality of service class identifier QCI, a dedicated allocation and retention priority ARP identifier, and a service identifier, and the service identifier is an identifier of a service that supports a handover to the sidelink radio bearer.

With reference to the second aspect, in another possible design, which is not covered by the claims, the dedicated information is an implicit indication, and the implicit indication is included in the first information or configuration information of the first bearer.

With reference to the second aspect, in still another possible design, the first bearer includes a data radio bearer, an evolved UMTS terrestrial radio access network radio access bearer E-RAB, an evolved packet system EPS bearer, or an S1 bearer.

With reference to the second aspect, in yet another possible design, the first bearer identifier includes an E-RAB identifier.

With reference to the second aspect the network node includes a mobility management entity MME or a second base station.

With reference to the second aspect, in a further possible design, the network node is the MME, the first information further includes a handover instruction, and the handover instruction is used to instruct the first base station to instruct, according to the handover instruction, the first bearer identifier, and the dedicated information, the user equipment to hand over the first bearer corresponding to the first bearer identifier to the sidelink radio bearer.

With reference to the second aspect, in a still further possible design, the network node is the second base station, and the method further includes: receiving, by the network node, second information sent by the first base station, where the second information includes the first bearer identifier and configuration information of the sidelink radio bearer; determining, by the network node, that the first bearer supports a handover to the sidelink radio bearer; and sending, by the network node, the configuration information of the sidelink radio bearer to the user equipment, so that the user equipment hands over the first bearer to the sidelink radio bearer based on the first bearer identifier and the configuration information of the sidelink radio bearer.

According to a third aspect, a base station device is provided, and the base station device includes: a receiving unit, configured to receive first information sent by a network node, where the first information includes a first bearer identifier and dedicated information, and the dedicated information is used to indicate that a first bearer corresponding to the first bearer identifier supports a handover to a sidelink radio bearer.

With reference to the third aspect, the base station device further includes: a sending unit, configured to instruct, based on the first bearer identifier and the dedicated information, user equipment to hand over the first bearer to the sidelink radio bearer.

With reference to the third aspect, the dedicated information includes one or more pieces of the following information: a dedicated quality of service class identifier QCI, a dedicated allocation and retention priority ARP identifier, and a service identifier, and the service identifier is an identifier of a service that supports a handover to the sidelink radio bearer.

With reference to the third aspect, in still another possible design, which is not covered by the claims, the dedicated information is an implicit indication, and the implicit indication is included in the first information or configuration information of the first bearer.

With reference to the third aspect, in yet another possible design, the first bearer includes a data radio bearer, an evolved UMTS terrestrial radio access network radio access bearer E-RAB, an evolved packet system EPS bearer, or an S1 bearer.

With reference to the third aspect, in still yet another possible design, the first bearer identifier includes an E-RAB identifier.

With reference to the third aspect, the network node includes a mobility management entity MME or a second base station.

With reference to the third aspect, in a still further possible design, the network node is the MME, the first information further includes a handover instruction, and the sending unit is specifically configured to instruct, according to the handover instruction, the first bearer identifier, and the dedicated information, the user equipment to hand over the first bearer corresponding to the first bearer identifier to the sidelink radio bearer.

With reference to the third aspect, in a yet further possible design, the network node is the second base station, and the sending unit is specifically configured to: determine, based on the first bearer identifier and the dedicated information, that the first bearer supports a handover to the sidelink radio bearer; and send second information to the second base station, where the second information includes the first bearer identifier and configuration information of the sidelink radio bearer, so that the second base station determines that the first bearer supports a handover to the sidelink radio bearer, and sends the configuration information of the sidelink radio bearer to the user equipment, and the user equipment hands over the first bearer to the sidelink radio bearer based on the configuration information of the sidelink radio bearer.

With reference to the third aspect, in a still yet further possible design, the sending unit is further configured to send request information to the MME, where the request information carries the first bearer identifier, and the first bearer identifier is used by the MME to release an E-RAB bearer, an EPS bearer, or an S1 bearer on a core network side based on the first bearer identifier.

With reference to the third aspect, in even yet another possible design, the sending unit is further configured to send third information to the user equipment, where the third information is used to instruct the user equipment to perform data transmission in a base station relay mode.

According to a fourth aspect, a network node is provided, and the network node includes: a sending unit, configured to send first information to a first base station, where the first information includes a first bearer identifier and dedicated information, and the dedicated information is used to indicate that a first bearer corresponding to the first bearer identifier supports a handover to a sidelink radio bearer.

With reference to the fourth aspect, the dedicated information includes one or more pieces of the following information: a dedicated quality of service class identifier QCI, a dedicated allocation and retention priority ARP identifier, and a service identifier, and the service identifier is an identifier of a service that supports a handover to the sidelink radio bearer.

With reference to the fourth aspect, in another possible design, which is not covered by the claims, the dedicated information is an implicit indication, and the implicit indication is included in the first information or configuration information of the first bearer.

With reference to the fourth aspect, in still another possible design, the first bearer includes a data radio bearer, an evolved UMTS terrestrial radio access network radio access bearer E-RAB, an evolved packet system EPS bearer, or an S1 bearer.

With reference to the fourth aspect, in yet another possible design, the first bearer identifier includes an E-RAB identifier.

With reference to the fourth aspect the network node includes a mobility management entity MME or a second base station.

With reference to the fourth aspect, in a further possible design, the network node is the MME, the first information further includes a handover instruction, and the handover instruction is used to instruct the first base station to instruct, according to the handover instruction, the first bearer identifier, and the dedicated information, the user equipment to hand over the first bearer corresponding to the first bearer identifier to the sidelink radio bearer.

With reference to the fourth aspect, in a still further possible design, the network node is the second base station, and the network node further includes: a receiving unit, configured to receive second information sent by the first base station, where the second information includes the first bearer identifier and configuration information of the sidelink radio bearer; and a determining unit, configured to determine that the first bearer supports a handover to the sidelink radio bearer. The sending unit is further configured to send the configuration information of the sidelink radio bearer to the user equipment, so that the user equipment hands over the first bearer to the sidelink radio bearer based on the first bearer identifier and the configuration information of the sidelink radio bearer.

According to a fifth aspect, which is not covered by the claims, a base station device is provided. The base station device includes a receiver, and the receiver is configured to receive first information sent by a network node, where the first information includes a first bearer identifier and dedicated information, and the dedicated information is used to indicate that a first bearer corresponding to the first bearer identifier supports a handover to a sidelink radio bearer.

With reference to the fifth aspect, in a possible design, the base station device further includes a transmitter, and the transmitter is configured to instruct, based on the first bearer identifier and the dedicated information, user equipment to hand over the first bearer to the sidelink radio bearer.

With reference to the fifth aspect, in another possible design, the dedicated information includes one or more pieces of the following information: indication information, a dedicated quality of service class identifier QCI, a dedicated allocation and retention priority ARP identifier, and a service identifier, and the service identifier is an identifier of a service that supports a handover to the sidelink radio bearer.

With reference to the fifth aspect, in still another possible design, the dedicated information is an implicit indication, and the implicit indication is included in the first information or configuration information of the first bearer.

With reference to the fifth aspect, in yet another possible design, the first bearer includes a data radio bearer, an evolved UMTS terrestrial radio access network radio access bearer E-RAB, an evolved packet system EPS bearer, or an S1 bearer.

With reference to the fifth aspect, in still yet another possible design, the first bearer identifier includes an E-RAB identifier.

With reference to the fifth aspect, in a further possible design, the network node includes a mobility management entity MME, a second base station, or a terminal device.

With reference to the fifth aspect, in a still further possible design, the network node is the MME, the first information further includes a handover instruction, and the transmitter is specifically configured to instruct, according to the handover instruction, the first bearer identifier, and the dedicated information, the user equipment to hand over the first bearer corresponding to the first bearer identifier to the sidelink radio bearer.

With reference to the fifth aspect, in a yet further possible design, the network node is the second base station, and the transmitter is specifically configured to: determine, based on the first bearer identifier and the dedicated information, that the first bearer supports a handover to the sidelink radio bearer; and send second information to the second base station, where the second information includes the first bearer identifier and configuration information of the sidelink radio bearer, so that the second base station determines that the first bearer supports a handover to the sidelink radio bearer, and sends the configuration information of the sidelink radio bearer to the user equipment, and the user equipment hands over the first bearer to the sidelink radio bearer based on the configuration information of the sidelink radio bearer.

With reference to the fifth aspect, in a still yet further possible design, the transmitter is further configured to send request information to the MME, where the request information carries the first bearer identifier, and the first bearer identifier is used by the MME to release an E-RAB bearer, an EPS bearer, or an S1 bearer on a core network side based on the first bearer identifier.

With reference to the fifth aspect, in even yet another possible design, the transmitter is further configured to send third information to the user equipment, where the third information is used to instruct the user equipment to perform data transmission in a base station relay mode.

According to a sixth aspect, which is not covered by the claims, a network node is provided. The network node includes a transmitter, and the transmitter is configured to send first information to a first base station, where the first information includes a first bearer identifier and dedicated information, and the dedicated information is used to indicate that a first bearer corresponding to the first bearer identifier supports a handover to a sidelink radio bearer.

With reference to the sixth aspect, in a possible design, the dedicated information includes one or more pieces of the following information: indication information, a dedicated quality of service class identifier QCI, a dedicated allocation and retention priority ARP identifier, and a service identifier, and the service identifier is an identifier of a service that supports a handover to the sidelink radio bearer.

With reference to the sixth aspect, in another possible design, the dedicated information is an implicit indication, and the implicit indication is included in the first information or configuration information of the first bearer.

With reference to the sixth aspect, in still another possible design, the first bearer includes a data radio bearer, an evolved UMTS terrestrial radio access network radio access bearer E-RAB, an evolved packet system EPS bearer, or an S1 bearer.

With reference to the sixth aspect, in yet another possible design, the first bearer identifier includes an E-RAB identifier.

With reference to the sixth aspect, in still yet another possible design, the network node includes a mobility management entity MME, a second base station, or a terminal device.

With reference to the sixth aspect, in a further possible design, the network node is the MME, the first information further includes a handover instruction, and the handover instruction is used to instruct the first base station to instruct, according to the handover instruction, the first bearer identifier, and the dedicated information, the user equipment to hand over the first bearer corresponding to the first bearer identifier to the sidelink radio bearer.

With reference to the sixth aspect, in a still further possible design, the network node is the second base station, and the network node further includes a receiver and a processor. The receiver is configured to receive second information sent by the first base station, where the second information includes the first bearer identifier and configuration information of the sidelink radio bearer. The processor is configured to determine that the first bearer supports a handover to the sidelink radio bearer. The transmitter is further configured to send the configuration information of the sidelink radio bearer to the user equipment, so that the user equipment hands over the first bearer to the sidelink radio bearer based on the first bearer identifier and the configuration information of the sidelink radio bearer.

The bearer handover method, the base station device, and the network node provided in the embodiments of the present invention are implemented to achieve the following beneficial effects:

The base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic diagram of V2V/V2I communication;
FIG. 2 is a schematic communication diagram in which a V2X message is transmitted through terminal direct communication;
FIG. 3 is a schematic communication diagram in which a V2X message is transmitted by using a base station;
FIG. 4 is a schematic diagram of a bearer;
FIG. 5 is a schematic diagram of an E-RAB bearer handover and an SLRB bearer handover according to an embodiment of the present invention;
FIG. 6 is a schematic diagram of an interaction procedure of a bearer handover method according to an embodiment of the present invention;
FIG. 7 is a schematic diagram of an interaction procedure of another bearer handover method according to an embodiment of the present invention;
FIG. 8 is a schematic diagram of an interaction procedure of still another bearer handover method according to an embodiment of the present invention;
FIG. 9A and FIG. 9B are a schematic diagram of an interaction procedure of yet another bearer handover method according to an embodiment of the present invention;
FIG. 10 is a schematic structural diagram of a base station device according to an embodiment of the present invention;
FIG. 11 is a schematic structural diagram of another base station device according to an embodiment of the present invention;
FIG. 12 is a schematic structural diagram of a network node according to an embodiment of the present invention;
FIG. 13 is a schematic structural diagram of another network node according to an embodiment of the present invention;
FIG. 14 is a schematic structural diagram of still another base station device according to an embodiment of the present invention;
FIG. 15 is a schematic structural diagram of yet another base station device according to an embodiment of the present invention;
FIG. 16 is a schematic structural diagram of still another network node according to an embodiment of the present invention; and
FIG. 17 is a schematic structural diagram of yet another network node according to an embodiment of the present invention.

### DESCRIPTION OF EMBODIMENTS

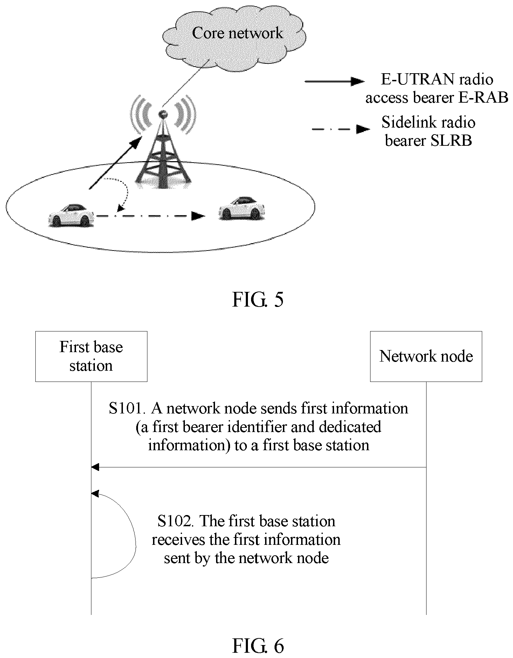

FIG. 5 is a schematic diagram of an E-RAB bearer handover and an SLRB bearer handover according to an embodiment of the present invention. In a scenario of this embodiment of the present invention, user equipment currently performs data transmission in a base station relay mode, that is, the user equipment performs data transmission on a first bearer, and based on a network status, a user equipment service requirement, or the like, the user equipment needs to be handed over from the first bearer to an SLRB bearer for data transmission. However, a control base station of the user equipment does not learn whether the first bearer supports a handover to the SLRB bearer. According to this embodiment of the present invention, a base station receives information sent by a network node. The information includes a bearer identifier and dedicated information, and the dedicated information indicates that a bearer corresponding to the bearer identifier supports a handover to a sidelink radio bearer. In this way, the base station can promptly and accurately identify, based on the information, a bearer that is to be handed over to a sidelink.

FIG. 6 is a schematic diagram of an interaction procedure of a bearer handover method according to an embodiment of the present invention. The method is performed by two network elements: a first base station and a network node, and the method includes the following steps:
S101. The network node sends first information to the first base station.
S102. The first base station receives the first information sent by the network node.

In this embodiment, the first information includes a first bearer identifier and dedicated information, and the dedicated information is used to indicate that a first bearer corresponding to the first bearer identifier supports a handover to a sidelink radio bearer.

In an implementation, the dedicated information may be explicit indication information that is used to explicitly indicate that the bearer corresponding to the bearer identifier supports a handover to the sidelink radio bearer. The dedicated information includes one or more pieces of the following information: indication information, a dedicated quality of service class identifier (QCI), a dedicated allocation and retention priority (ARP) identifier, and a service identifier, and the service identifier is an identifier of a service that supports a handover to the sidelink radio bearer. The service may be a short range communication service, a V2V service, and/or a V2P service.

In another implementation, the dedicated information may be implicit indication information that is used to implicitly indicate that the bearer corresponding to the bearer identifier supports a handover to the sidelink radio bearer, so that signaling resources can be saved. The dedicated information is an implicit indication, and the implicit indication is included in the first information or configuration information of the first bearer. For example, a dedicated information name or a dedicated E-RAB identifier may be used for an implicit indication.

In this embodiment, the first bearer includes a data radio bearer, an evolved UMTS terrestrial radio access network radio access bearer E-RAB, an evolved packet system EPS bearer, or an S1 bearer. The first bearer may be an entire bearer or a segment of a bearer.

Specifically, the first bearer identifier is preferably an E-RAB identifier. The first bearer is preferably an E-RAB bearer. When the first bearer is the data radio bearer, the evolved packet system EPS bearer, or the S1 bearer, the E-RAB identifier is associated with an identifier of the corresponding data radio bearer, the corresponding EPS bearer, and/or the corresponding S1 bearer.

Optionally, the first bearer identifier may be a data bearer identifier. The first bearer is preferably a radio data bearer. When the first bearer is the evolved UMTS terrestrial radio access network radio access bearer E-RAB, the evolved packet system EPS bearer, or the S1 bearer, the data bearer identifier is associated with an identifier of the corresponding E-RAB, the corresponding EPS bearer, and/or the corresponding S1 bearer.

Optionally, in terms of information element design, corresponding dedicated information may be configured for each first bearer identifier, or a plurality of first bearer identifiers may be corresponding to same dedicated information.

Optionally, the method further includes: determining, by the first base station based on the first bearer identifier and the dedicated information, that the first bearer supports a handover to the sidelink radio bearer.

In this embodiment, the network node includes a mobility management entity MME, a second base station, or a terminal device. That is, the information including the bearer identifier and the dedicated information may be from the MME, another base station, or the terminal device, and there are diversified implementations.

According to the bearer handover method provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink.

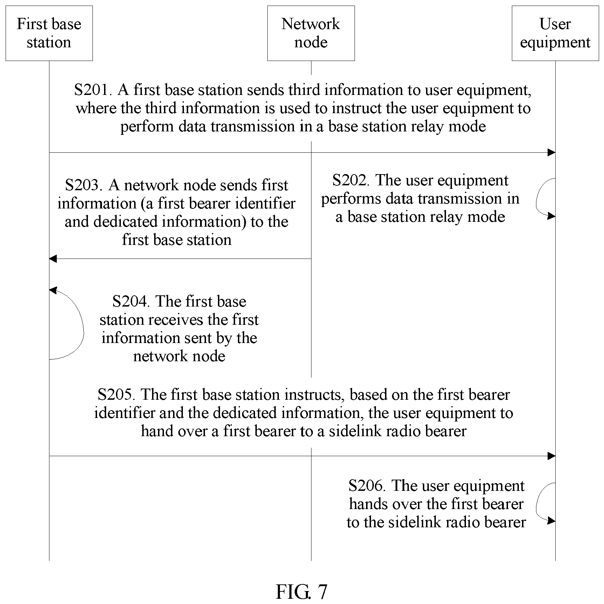

FIG. 7 is a schematic diagram of an interaction procedure of another bearer handover method according to an embodiment of the present invention. The method is performed by three network elements: a first base station, a network node, and user equipment, and the method includes the following steps.

S201: The first base station sends third information to the user equipment.

S202. The user equipment performs data transmission in a base station relay mode.

A difference between this embodiment and the embodiment shown in FIG. 6 lies in that, before performing a radio bearer handover, the user equipment currently performs data transmission in a base station relay mode, that is, the user equipment performs data transmission with the base station by using a Uu interface. However, the user equipment performs data transmission in a base station relay mode after receiving the third information of the first base station. The third information is used to instruct the user equipment to perform data transmission in a base station relay mode.

Specifically, optionally, the third information may be sent by using radio resource control (RRC) dedicated information or system information.

Optionally, the third information is used to indicate that the base station supports only a base station relay transmission mode (or referred to as a Uu interface transmission mode). In this case, when or after receiving the third information, the UE determines to use the base station relay transmission mode.

Optionally, the third information is used to indicate that the base station supports the UE in independently selecting a base station relay transmission mode or a sidelink transmission mode. In this case, when or after receiving the third information, the UE may independently select a transmission mode based on a capability and a service requirement that are of the UE. Optionally, the UE independently selects the base station relay transmission mode.

Optionally, the third information is used to instruct the UE to send a transmission mode request to the base station. In this case, the UE sends the transmission mode request to the base station when or after receiving the third information. Optionally, the transmission mode request may carry a transmission mode expected by the UE, and may include a base station relay transmission mode or a sidelink transmission mode, or both a base station relay transmission mode and a sidelink transmission mode. Optionally, the transmission mode request may carry service information, so that the base station determines a transmission mode based on the service information. Optionally, the transmission mode request may carry measurement information, so that the base station determines a transmission mode based on the measurement information. The base station determines the transmission mode based on the transmission mode request, and sends transmission mode configuration information to the UE. The transmission mode configuration information indicates that the UE uses the base station relay transmission mode or the sidelink transmission mode.

Then, a network establishes different EPS bearers for the user equipment between the user equipment and a P-GW as required. The bearer includes a data radio bearer, an E-RAB bearer, an EPS bearer, or an S1 bearer.

S203. The network node sends first information to the first base station.

S204. The first base station receives the first information sent by the network node.

S205. The first base station instructs, based on a first bearer identifier and dedicated information, the user equipment to hand over a first bearer to a sidelink radio bearer.

S206. The user equipment hands over the first bearer to the sidelink radio bearer.

A difference between this embodiment and the embodiment shown in FIG. 6 lies in that, after the first base station receives the first information of the network node, the first base station instructs, based on the first bearer identifier and the dedicated information, the user equipment to hand over the first bearer to the sidelink radio bearer, so that the user equipment hands over the first bearer to the sidelink radio bearer. The base station can promptly and accurately instruct, based on the received bearer identifier and the received dedicated information, the user equipment to hand over a handover-supported E-UTRAN radio access bearer to the sidelink radio bearer for transmission.

According to the bearer handover method provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink, and hand over the handover-supported E-UTRAN radio access bearer to the sidelink bearer for transmission. The base station instructs, by using the information, the user equipment to perform data transmission in a base station relay mode.

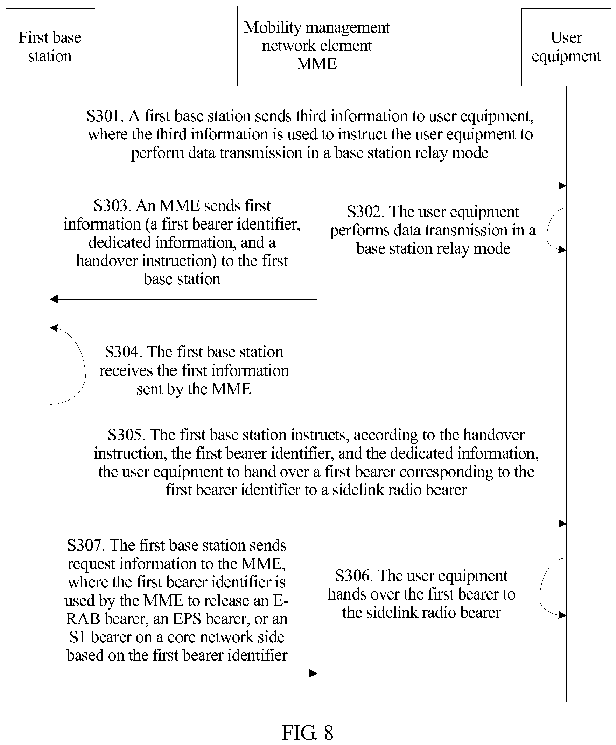

FIG. 8 is a schematic diagram of an interaction procedure of still another bearer handover method according to an embodiment of the present invention. The method is performed by three network elements: a first base station, an MME, and user equipment, and the method includes the following steps.

S301: The first base station sends third information to the user equipment.

S302. The user equipment performs data transmission in a base station relay mode.

S303. The MME sends first information to the first base station.

In this embodiment, the network node is the MME. The first information may be E-RAB setup information, E-RAB modify information, handover request information, or handover control information.

Optionally, before S303, the method may further include:
receiving, by the MME, non-access stratum (NAS) information sent by the UE, determining, based on the NAS information, a first bearer that is of a first service and that needs to be set up/modified/handed over, and obtaining a first bearer identifier, where the first bearer identifier may be an E-RAB identifier.

Specifically, the MME identifies, by using the NAS information, the first bearer that is of the first service and that needs to be set up/modified/handed over, and the first bearer needs to support a handover to a sidelink for transmission.

Optionally, one of conditions for determining, by the MME, that the first bearer of the first service needs to support a handover to the sidelink for transmission is that the first service is identified as a short range communication service. Optionally, the MME directly determines, by using the NAS information, that the first service is a short range service, or may determine, by using the NAS information by further negotiating with another control network element of the UE, that the first service is a short range service.

Optionally, the first service may be a V2V service.

A difference between this embodiment and the embodiments shown in FIG. 7 and FIG. 8 lies in that the first information further includes a handover instruction, and the MME indicates a moment of performing a bearer handover by the base station.

S304. The first base station receives the first information sent by the MME.

S305. The first base station instructs, according to a handover instruction, a first bearer identifier, and dedicated information, the user equipment to hand over a first bearer corresponding to the first bearer identifier to a sidelink radio bearer.

S306. The user equipment hands over the first bearer to the sidelink radio bearer.

A difference between this embodiment and the embodiments shown in FIG. 6 and FIG. 7 lies in that the MME determines the moment of performing a bearer handover by the base station. When sending the first information, the MME adds the handover instruction to the first information. The first base station instructs, according to the handover instruction, the first bearer identifier, and the dedicated information, the user equipment to hand over the first bearer corresponding to the first bearer identifier to the sidelink radio bearer.

In an alternative manner of step S305 and step S306, after the base station determines that the first bearer supports a handover to the sidelink radio bearer, the base station may determine a moment of initiating a handover. In this alternative manner, the first information does not need to include the handover instruction. In this case, the base station may send measurement configuration information to the UE, and determine, based on measurement report information reported by the UE, to hand over at least one first bearer to the sidelink radio bearer. In addition, the base station may directly trigger to hand over the at least one first bearer to the sidelink radio bearer. In this alternative manner, the base station independently determines the moment of initiating a handover, and the base station may flexibly determine this moment.

S307. The first base station sends request information to the MME, where the request information carries the first bearer identifier, and the first bearer identifier is used by the MME to release an E-RAB bearer, an EPS bearer, or an S1 bearer on a core network side based on the first bearer identifier.

Another difference between this embodiment and the embodiments shown in FIG. 7 and FIG. 8 lies in that, after the first base station instructs the user equipment to hand over the first bearer to the sidelink radio bearer, the first base station further requests the MME to release a bearer.

According to the bearer handover method provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink, and hand over a handover-supported E-UTRAN radio access bearer to the sidelink bearer for transmission. The base station instructs, by using the information, the user equipment to perform data transmission in a base station relay mode. The MME determines the moment of performing a bearer handover by the base station. After the bearer handover is completed, the base station requests the MME to release resources occupied by the bearer before the handover, so that communication resources can be effectively utilized.

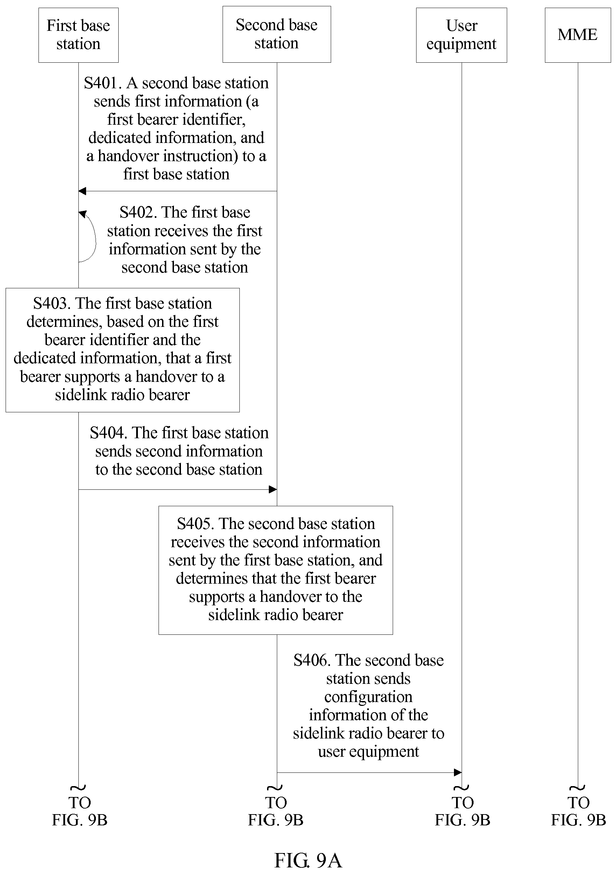

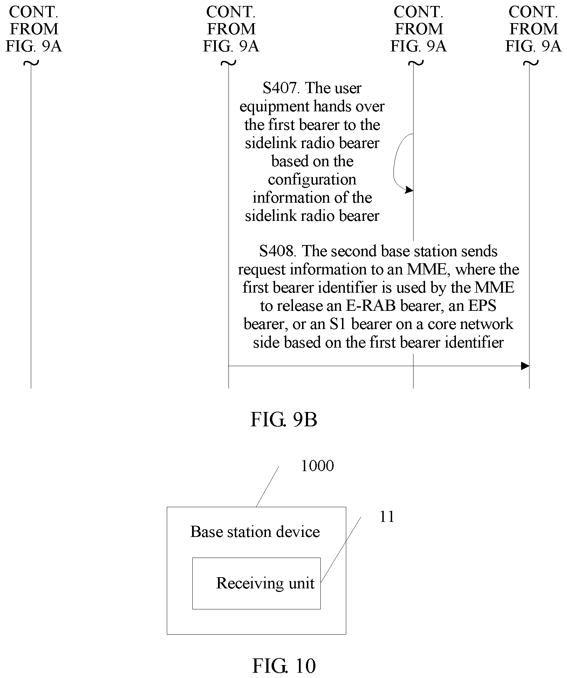

FIG. 9A and FIG. 9B are a schematic diagram of an interaction procedure of yet another bearer handover method according to an embodiment of the present invention. The method is performed by four network elements: a first base station, a second base station, user equipment, and an MME, and the method includes the following steps.

S401. The second base station sends first information to the first base station.

In this embodiment, a network node is the second base station. This scenario includes but is not limited to a handover from an eNB2 to an eNB1 that needs to be performed when the UE moves from the eNB2 to the eNB1. In this case, the eNB2 notifies the eNB 1 of an E-RAB configuration of the UE, so that the eNB 1 identifies a bearer that supports a handover to a sidelink. The first information may be handover request information or handover acknowledgement information. The handover means that the UE is handed over from the eNB2 to the eNB1.

S402. The first base station receives the first information sent by the second base station.

S403. The first base station determines, based on a first bearer identifier and dedicated information, that a first bearer supports a handover to a sidelink radio bearer.

S404. The first base station sends second information to the second base station.

The second information includes the first bearer identifier and configuration information of the sidelink radio bearer.

S405. The second base station receives the second information sent by the first base station, and determines that the first bearer supports a handover to the sidelink radio bearer.

S406. The second base station sends configuration information of the sidelink radio bearer to the user equipment.

S407. The user equipment hands over the first bearer to the sidelink radio bearer based on the configuration information of the sidelink radio bearer.

In this embodiment, the second base station forwards the configuration information of the sidelink radio bearer of the first base station to the user equipment. The first base station sends the second information to the second base station. The second information includes the first bearer identifier and the configuration information of the sidelink radio bearer, so that the second base station determines that the first bearer supports a handover to the sidelink radio bearer, and sends the configuration information of the sidelink radio bearer to the user equipment, and the user equipment hands over the first bearer to the sidelink radio bearer based on the configuration information of the sidelink radio bearer. Specifically, the second information may be handover acknowledgement information.

S408. The second base station sends request information to the MME, where the request information carries the first bearer identifier, and the first bearer identifier is used by the MME to release an E-RAB bearer, an EPS bearer, or an S1 bearer on a core network side based on the first bearer identifier.

Another difference between this embodiment and the embodiments shown in FIG. 7 and FIG. 8 lies in that, after the first base station instructs the user equipment to hand over the first bearer to the sidelink radio bearer, the second base station further requests the MME to release a bearer.

Specifically, the eNB2 sends request information to the MME, and the request information carries an E-RAB identifier, so that the MME releases the E-RAB bearer, the EPS bearer, or the S1 bearer on the core network side based on the E-RAB identifier. Optionally, the request information may be E-RAB release indication information or path handover request information. When the request information is the path handover request information, the information may further carry a release indication used for indicating that a bearer corresponding to the E-RAB identifier needs to be released.

In an alternative manner of steps S404 to S407, the eNB 1 may directly send radio resource control (RRC) reconfiguration information to the UE, and the RRC reconfiguration information carries the first bearer identifier and the configuration information of the sidelink radio bearer. The UE hands over the first bearer to the sidelink radio bearer based on the RRC reconfiguration information. Optionally, further, the eNB1 sends request information to the MME. The request information carries the first bearer identifier, and the first bearer identifier is used by the MME to release the E-RAB bearer, the EPS bearer, or the S1 bearer on the core network side based on an E-RAB identifier. Optionally, the request information may be E-RAB release indication information or path handover request information. When the request information is the path handover request information, the information may further carry a release indication used for indicating that a bearer corresponding to the E-RAB identifier needs to be released.

According to the bearer handover method provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink, and hand over a handover-supported E-UTRAN radio access bearer to the sidelink radio bearer for transmission. The base station instructs, by using the information, the user equipment to perform data transmission in a base station relay mode. The second base station forwards the configuration information of the sidelink radio bearer of the first base station to the user equipment. After the bearer handover is completed, the base station requests the MME to release resources occupied by the bearer before the handover, so that communication resources can be effectively utilized.

It should be noted that, for ease of description, the foregoing method embodiments are described as a series of action combinations. However, a person skilled in the art should know that the present invention is not limited to the described action sequence, because according to the present invention, some steps may be performed in other sequences or simultaneously. In addition, a person skilled in the art should also appreciate that all the embodiments described in this specification are example embodiments, and the related actions and modules are not necessarily mandatory to the present invention.

FIG. 10 is a schematic structural diagram of a base station device according to an embodiment of the present invention. The base station device 1000 includes:
a receiving unit 11, configured to receive first information sent by a network node, where the first information includes a first bearer identifier and dedicated information, and the dedicated information is used to indicate that a first bearer corresponding to the first bearer identifier supports a handover to a sidelink radio bearer.

In this embodiment, the first information includes the first bearer identifier and the dedicated information, and the dedicated information is used to indicate that the first bearer corresponding to the first bearer identifier supports a handover to the sidelink radio bearer.

In an implementation, the dedicated information may be explicit indication information that is used to explicitly indicate that the bearer corresponding to the bearer identifier supports a handover to the sidelink radio bearer. The dedicated information includes one or more pieces of the following information: indication information, a dedicated quality of service class identifier, a dedicated allocation and retention priority identifier, and a service identifier, and the service identifier is an identifier of a service that supports a handover to the sidelink radio bearer. The service may be a short range communication service, a V2V service, or a V2P service.

In another implementation, the dedicated information may be implicit indication information that is used to implicitly indicate that the bearer corresponding to the bearer identifier supports a handover to the sidelink radio bearer, so that signaling resources can be saved. The dedicated information is an implicit indication, and the implicit indication is included in the first information or configuration information of the first bearer. For example, a dedicated information name or a dedicated E-RAB identifier may be used for an implicit indication.

In this embodiment, the first bearer includes a data radio bearer, an evolved UMTS terrestrial radio access network radio access bearer E-RAB, an evolved packet system EPS bearer, or an S1 bearer. The first bearer may be an entire bearer or a segment of a bearer.

Specifically, the first bearer identifier is preferably an E-RAB identifier. The first bearer is preferably an E-RAB bearer. When the first bearer is the data radio bearer, the evolved packet system EPS bearer, or the S1 bearer, the E-RAB identifier is associated with an identifier of the corresponding data radio bearer, the corresponding EPS bearer, or the corresponding S1 bearer.

Optionally, the first bearer identifier may be a data bearer identifier. The first bearer is preferably a radio data bearer. When the first bearer is the evolved UMTS terrestrial radio access network radio access bearer E-RAB, the evolved packet system EPS bearer, or the S1 bearer, the data bearer identifier is associated with an identifier of the corresponding E-RAB, the corresponding EPS bearer, or the corresponding S1 bearer.

Optionally, in terms of information element design, corresponding dedicated information may be configured for each first bearer identifier, or a plurality of first bearer identifiers may be corresponding to same dedicated information.

In this embodiment, the network node includes a mobility management entity MME, a second base station, or a terminal device. That is, the information including the bearer identifier and the dedicated information may be from the MME, another base station, or the terminal device, and there are diversified implementations.

According to the base station device provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink.

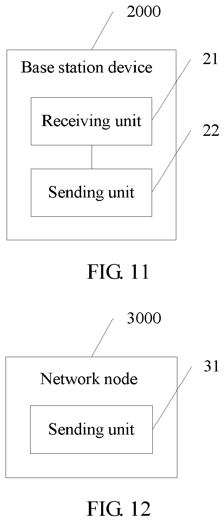

FIG. 11 is a schematic structural diagram of another base station device according to an embodiment of the present invention. The base station device 2000 includes a receiving unit 21 and a sending unit 22.

The receiving unit 21 is configured to receive first information sent by a network node. The first information includes a first bearer identifier and dedicated information, and the dedicated information is used to indicate that a first bearer corresponding to the first bearer identifier supports a handover to a sidelink radio bearer.

The network node is an MME. The first information may be E-RAB setup information, E-RAB modify information, handover request information, or handover control information.

The network node is a second base station. This scenario includes but is not limited to a handover from an eNB2 to an eNB1 that needs to be performed when UE moves from the eNB2 to the eNB1. In this case, the eNB2 notifies the eNB 1 of an E-RAB configuration of the UE, so that the eNB 1 identifies a bearer that supports a handover to a sidelink. The first information may be handover request information or handover acknowledgement information. The handover means that the UE is handed over from the eNB2 to the eNB1.

The sending unit 22 is configured to instruct, based on the first bearer identifier and the dedicated information, user equipment to hand over the first bearer to the sidelink radio bearer.

After a first base station receives the first information of the network node, the first base station instructs, based on the first bearer identifier and the dedicated information, the user equipment to hand over the first bearer to the sidelink radio bearer, so that the user equipment hands over the first bearer to the sidelink radio bearer. The base station can promptly and accurately instruct, based on the received bearer identifier and the received dedicated information, the user equipment to hand over a handover-supported E-UTRAN radio access bearer to the sidelink radio bearer for transmission.

Optionally, when the network node is the MME, the sending unit 22 is further configured to send third information to the user equipment. The third information is used to instruct the user equipment to perform data transmission in a base station relay mode.

Before performing a radio bearer handover, the user equipment currently performs data transmission in a base station relay mode, that is, the user equipment performs data transmission with the base station by using a Uu interface. However, the user equipment performs data transmission in a base station relay mode after receiving the third information of the first base station. The third information is used to instruct the user equipment to perform data transmission in a base station relay mode.

Specifically, optionally, the third information may be sent by using radio resource control dedicated information or system information.

Optionally, the third information is used to indicate that the base station supports only a base station relay transmission mode (or referred to as a Uu interface transmission mode). In this case, when or after receiving the third information, the UE determines to use the base station relay transmission mode.

Optionally, the third information is used to indicate that the base station supports the UE in independently selecting a base station relay transmission mode or a sidelink transmission mode. In this case, when or after receiving the third information, the UE may independently select a transmission mode based on a capability and a service requirement that are of the UE. Optionally, the UE independently selects the base station relay transmission mode.

Optionally, the third information is used to instruct the UE to send a transmission mode request to the base station. In this case, the UE sends the transmission mode request to the base station when or after receiving the third information. Optionally, the transmission mode request may carry a transmission mode expected by the UE, and may include a base station relay transmission mode or a sidelink transmission mode, or both a base station relay transmission mode and a sidelink transmission mode. Optionally, the transmission mode request may carry service information, so that the base station determines a transmission mode based on the service information. Optionally, the transmission mode request may carry measurement information, so that the base station determines a transmission mode based on the measurement information. The base station determines the transmission mode based on the transmission mode request, and sends transmission mode configuration information to the UE. The transmission mode configuration information indicates that the UE uses the base station relay transmission mode or the sidelink transmission mode.

Then, a network establishes different EPS bearers for the user equipment between the user equipment and a P-GW as required. The bearer includes a data radio bearer, an E-RAB bearer, an EPS bearer, or an S1 bearer.

In an implementation of a handover moment, the network node is the MME, the first information further includes a handover instruction, and the sending unit 22 is specifically configured to:
instruct, according to the handover instruction, the first bearer identifier, and the dedicated information, the user equipment to hand over the first bearer corresponding to the first bearer identifier to the sidelink radio bearer.

In this implementation, the MME indicates a moment of performing a bearer handover by the base station. When sending the first information, the MME adds the handover instruction to the first information. The first base station instructs, according to the handover instruction, the first bearer identifier, and the dedicated information, the user equipment to hand over the first bearer corresponding to the first bearer identifier to the sidelink radio bearer.

In an alternative manner of the handover moment, after the base station determines that the first bearer supports a handover to the sidelink radio bearer, the base station may determine a moment of initiating a handover. In this alternative manner, the first information does not need to include the handover instruction. In this case, the base station may send measurement configuration information to the UE, and determine, based on measurement report information reported by the UE, to hand over at least one first bearer to the sidelink radio bearer. In addition, the base station may directly trigger to hand over the at least one first bearer to the sidelink radio bearer. In this alternative manner, the base station independently determines the moment of initiating a handover, and the base station may flexibly determine this moment.

In another implementation, the network node is the second base station, and the sending unit 22 is specifically configured to:
determine, based on the first bearer identifier and the dedicated information, that the first bearer supports a handover to the sidelink radio bearer; and
send second information to the second base station, where the second information includes the first bearer identifier and configuration information of the sidelink radio bearer, so that the second base station determines that the first bearer supports a handover to the sidelink radio bearer, and sends the configuration information of the sidelink radio bearer to the user equipment, and the user equipment hands over the first bearer to the sidelink radio bearer based on the configuration information of the sidelink radio bearer. Specifically, the second information may be handover acknowledgement information.

The sending unit 22 is further configured to send request information to the MME. The request information carries the first bearer identifier, and the MME releases an E-RAB bearer, an EPS bearer, or an S1 bearer on a core network side based on the first bearer identifier.

After the first base station instructs the user equipment to hand over the first bearer to the sidelink radio bearer, the first base station further requests the MME to release a bearer. After the bearer handover is completed, the base station requests the MME to release resources occupied by the bearer before the handover, so that communication resources can be effectively utilized.

According to the base station device provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink, and hand over the handover-supported E-UTRAN radio access bearer to the sidelink radio bearer for transmission. The base station instructs, by using the information, the user equipment to perform data transmission in a base station relay mode. The MME or the base station independently determines the moment of performing a bearer handover by the base station, or the second base station forwards the handover instruction of the first base station to the user equipment. After the bearer handover is completed, the base station requests the MME to release resources occupied by the bearer before the handover, so that communication resources can be effectively utilized.

FIG. 12 is a schematic structural diagram of a network node according to an embodiment of the present invention. The network node 3000 includes:
a sending unit 31, configured to send first information to a first base station, where the first information includes a first bearer identifier and dedicated information, and the dedicated information is used to indicate that a first bearer corresponding to the first bearer identifier supports a handover to a sidelink radio bearer.

According to the network node provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink.

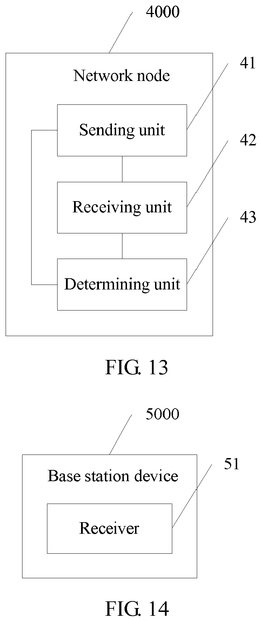

FIG. 13 is a schematic structural diagram of another network node according to an embodiment of the present invention. The network node 4000 includes:
a sending unit 41, configured to send first information to a first base station, where the first information includes a first bearer identifier and dedicated information, and the dedicated information is used to indicate that a first bearer corresponding to the first bearer identifier supports a handover to a sidelink radio bearer;
a receiving unit 42, configured to receive second information sent by the first base station, where the second information includes the first bearer identifier and configuration information of the sidelink radio bearer; and
a determining unit 43, configured to determine that the first bearer supports a handover to the sidelink radio bearer.

The sending unit 41 is further configured to send the configuration information of the sidelink radio bearer to the user equipment, so that the user equipment hands over the first bearer to the sidelink radio bearer based on the first bearer identifier and the configuration information of the sidelink radio bearer.

According to the network node provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink, and hand over a handover-supported E-UTRAN radio access bearer to the sidelink radio bearer for transmission. The base station may instruct, by using the information, the user equipment to perform data transmission in a base station relay mode. An MME or the base station independently determines a moment of performing a bearer handover by the base station, or a second base station forwards a handover instruction of the first base station to the user equipment. After the bearer handover is completed, the base station requests the MME to release resources occupied by the bearer before the handover, so that communication resources can be effectively utilized.

FIG. 14 is a schematic structural diagram of still another base station device according to an embodiment of the present invention. The base station device 5000 includes a receiver 51.

The receiver 51 is configured to receive first information sent by a network node. The first information includes a first bearer identifier and dedicated information, and the dedicated information is used to indicate that a first bearer corresponding to the first bearer identifier supports a handover to a sidelink radio bearer.

According to the base station device provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink.

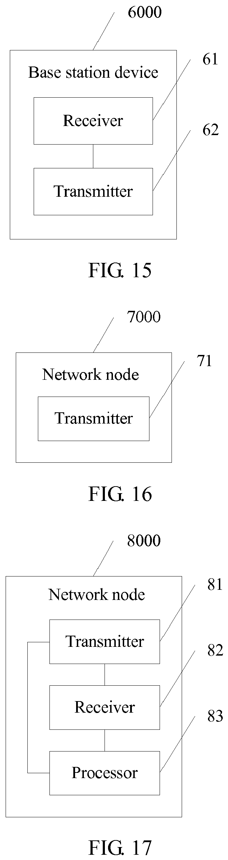

FIG. 15 is a schematic structural diagram of yet another base station device according to an embodiment of the present invention. The base station device 6000 includes a receiver 61 and a transmitter 62.

The receiver 61 is configured to receive first information sent by a network node. The first information includes a first bearer identifier and dedicated information, and the dedicated information is used to indicate that a first bearer corresponding to the first bearer identifier supports a handover to a sidelink radio bearer.

The transmitter 62 is configured to instruct, based on the first bearer identifier and the dedicated information, user equipment to hand over the first bearer to the sidelink radio bearer.

In an implementation, the dedicated information includes one or more pieces of the following information: indication information, a dedicated quality of service class identifier QCI, a dedicated allocation and retention priority ARP identifier, and a service identifier, and the service identifier is an identifier of a service that supports a handover to the sidelink radio bearer.

In another implementation, the dedicated information is an implicit indication, and the implicit indication is included in the first information or configuration information of the first bearer.

In still another implementation, the first bearer includes a data radio bearer, an evolved UMTS terrestrial radio access network radio access bearer E-RAB, an evolved packet system EPS bearer, or an S1 bearer.

In yet another implementation, the first bearer identifier includes an E-RAB identifier.

In still yet another implementation, the network node includes a mobility management entity MME, a second base station, or a terminal device.

In a further implementation, the network node is the MME, the first information further includes a handover instruction, and the transmitter 62 is specifically configured to:
instruct, according to the handover instruction, the first bearer identifier, and the dedicated information, the user equipment to hand over the first bearer corresponding to the first bearer identifier to the sidelink radio bearer.

In a still further implementation, the network node is the second base station, and the transmitter 62 is specifically configured to:
determine, based on the first bearer identifier and the dedicated information, that the first bearer supports a handover to the sidelink radio bearer; and
send second information to the second base station, where the second information includes the first bearer identifier and configuration information of the sidelink radio bearer, so that the second base station determines that the first bearer supports a handover to the sidelink radio bearer, and sends the configuration information of the sidelink radio bearer to the user equipment, and the user equipment hands over the first bearer to the sidelink radio bearer based on the configuration information of the sidelink radio bearer.

In a yet further implementation, the transmitter 62 is further configured to:
send request information to the MME, where the request information carries the first bearer identifier, and the first bearer identifier is used by the MME to release an E-RAB bearer, an EPS bearer, or an S1 bearer on a core network side based on the first bearer identifier.

In a still yet further implementation, the transmitter 62 is further configured to:
send third information to the user equipment, where the third information is used to instruct the user equipment to perform data transmission in a base station relay mode.

According to the base station device provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink, and hand over a handover-supported E-UTRAN radio access bearer to the sidelink radio bearer for transmission. The base station may instruct, by using the information, the user equipment to perform data transmission in a base station relay mode. The MME or the base station independently determines a moment of performing a bearer handover by the base station, or the second base station forwards the handover instruction of the first base station to the user equipment. After the bearer handover is completed, the base station requests the MME to release resources occupied by the bearer before the handover, so that communication resources can be effectively utilized.

FIG. 16 is a schematic structural diagram of still another network node according to an embodiment of the present invention. The network node 7000 includes a transmitter 71.

The transmitter 71 is configured to send first information to a first base station. The first information includes a first bearer identifier and dedicated information, and the dedicated information is used to indicate that a first bearer corresponding to the first bearer identifier supports a handover to a sidelink radio bearer.

According to the network node provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink.

FIG. 17 is a schematic structural diagram of yet another network node according to an embodiment of the present invention. The network node 8000 includes a transmitter 81.

The transmitter 81 is configured to send first information to a first base station. The first information includes a first bearer identifier and dedicated information, and the dedicated information is used to indicate that a first bearer corresponding to the first bearer identifier supports a handover to a sidelink radio bearer.

In an implementation, the dedicated information includes one or more pieces of the following information: indication information, a dedicated quality of service class identifier QCI, a dedicated allocation and retention priority ARP identifier, and a service identifier, and the service identifier is an identifier of a service that supports a handover to the sidelink radio bearer.

In another implementation, the dedicated information is an implicit indication, and the implicit indication is included in the first information or configuration information of the first bearer.

In still another implementation, the first bearer includes a data radio bearer, an evolved UMTS terrestrial radio access network radio access bearer E-RAB, an evolved packet system EPS bearer, or an S1 bearer.

In yet another implementation, the first bearer identifier includes an E-RAB identifier.

In still yet another implementation, the network node includes a mobility management entity MME, a second base station, or a terminal device.

In a further implementation, the network node is the MME, the first information further includes a handover instruction, and the handover instruction is used to instruct the first base station to instruct, according to the handover instruction, the first bearer identifier, and the dedicated information, the user equipment to hand over the first bearer corresponding to the first bearer identifier to the sidelink radio bearer.

In a still further implementation, the network node is the second base station, and the network node 8000 further includes a receiver 82 and a processor 83.

The receiver 82 is configured to receive second information sent by the first base station. The second information includes the first bearer identifier and configuration information of the sidelink radio bearer.

The processor 83 is configured to determine that the first bearer supports a handover to the sidelink radio bearer.

The transmitter 81 is further configured to send the configuration information of the sidelink radio bearer to the user equipment, so that the user equipment hands over the first bearer to the sidelink radio bearer based on the first bearer identifier and the configuration information of the sidelink radio bearer.

According to the network node provided in this embodiment of the present invention, the base station receives the information sent by the network node. The information includes the bearer identifier and the dedicated information, and the dedicated information indicates that the bearer corresponding to the bearer identifier supports a handover to the sidelink radio bearer. In this way, the base station can promptly and accurately identify, based on the information, a bearer that is to be handed over to a sidelink, and hand over a handover-supported E-UTRAN radio access bearer to the sidelink radio bearer for transmission. The base station may instruct, by using the information, the user equipment to perform data transmission in a base station relay mode. The MME or the base station independently determines a moment of performing a bearer handover by the base station, or the second base station forwards the handover instruction of the first base station to the user equipment. After the bearer handover is completed, the base station requests the MME to release resources occupied by the bearer before the handover, so that communication resources can be effectively utilized.

In the foregoing embodiments, the description of each embodiment has respective focuses. For a part that is not described in detail in an embodiment, reference may be made to related descriptions in other embodiments.

A sequence of the steps of the method in the embodiments of the present invention may be adjusted, and the steps may also be combined or deleted according to an actual requirement.

The units in the apparatus in the embodiments of the present invention may be combined, divided, and deleted according to an actual requirement. A person skilled in the art may combine different embodiments and features of different embodiments described in this specification.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is used as an example but is not limited: The computer readable medium may include a random access memory (RAM), a read-only memory (ROM), an electrically erasable programmable read-only memory (EEPROM), a compact disc read-only memory (CD-ROM) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk and disc used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely example embodiments of the technical solutions of the present invention, but is not intended to limit the protection scope of the present invention. Any modification, equivalent replacement, or improvement made without departing from the principle of the present invention shall fall within the protection scope of the present invention.

## Claims

1. A bearer handover method, **characterized by** comprising:
receiving (SI02), by a first base station (1000, 2000), first information sent (S101) by a network node (3000), the network node (3000) comprising a mobility management entity, MME, or a second base station, wherein the first information comprises a first bearer identifier and dedicated information, and the dedicated information indicates that a first bearer corresponding to the first bearer identifier supports a handover to a sidelink radio bearer, and wherein the dedicated information is an explicit indication information that further comprises one or more pieces of the following information: a dedicated quality of service class identifier QCI, a dedicated allocation and retention priority ARP identifier, and a service identifier being an identifier of a service that supports a handover to the sidelink radio bearer, and
instructing, by the first base station based on the first bearer identifier and the dedicated information, an user equipment to hand over the first bearer to the sidelink radio bearer.

2. A bearer handover method, **characterized by** comprising:
sending (S101), by a network node (3000), the network node (3000) comprising a mobility management entity, MME, or a second base station, first information to a first base station (1000, 2000), wherein the first information comprises a first bearer identifier and dedicated information, and the dedicated information indicates that a first bearer corresponding to the first bearer identifier supports a handover to a sidelink radio bearer wherein the dedicated information is an explicit indication information that further comprises one or more pieces of the following information: a dedicated quality of service class identifier QCI, a dedicated allocation and retention priority ARP identifier, and a service identifier being an identifier of a service that supports a handover to the sidelink radio bearer.

3. Abase station device (1000, 2000), **characterized by** comprising:
a receiving unit (11), configured to receive first information sent by a network node (3000), the network node (3000) comprising a mobility management entity, MME, or a second base station, wherein the first information comprises a first bearer identifier and dedicated information, and the dedicated information indicates that a first bearer corresponding to the first bearer identifier supports a handover to a sidelink radio bearer, and wherein the dedicated information is an explicit indication information that further comprises one or more pieces of the following information: a dedicated quality of service class identifier QCI, a dedicated allocation and retention priority ARP identifier, and a service identifier being an identifier of a service that supports a handover to the sidelink radio bearer; and
a sending unit (22), configured to instruct, based on the first bearer identifier and the dedicated information, an user equipment to hand over the first bearer to the sidelink radio bearer.

4. The base station device according to claim 3, wherein the network node (3000) is the MME, the first information further comprises a handover instruction, and the sending unit is specifically configured to:
instruct, according to the handover instruction, the first bearer identifier, and the dedicated information, the user equipment to hand over the first bearer corresponding to the first bearer identifier to the sidelink radio bearer.

5. A network node (3000), the network node (3000) comprising a mobility management entity, MME, or a second base station, **characterized by** further comprising:
a sending unit (31), configured to send first information to a first base station (1000, 2000), wherein the first information comprises a first bearer identifier and dedicated information, and the dedicated information indicates that a first bearer corresponding to the first bearer identifier supports a handover to a sidelink radio bearer, wherein the dedicated information is an explicit indication information that further comprises one or more pieces of the following information: a dedicated quality of service class identifier QCI, a dedicated allocation and retention priority ARP identifier, and a service identifier being an identifier of a service that supports a handover to the sidelink radio bearer.

## Patentansprüche

1. Träger-"Handover"-Verfahren, **dadurch gekennzeichnet, dass** es Folgendes umfasst:
Empfangen (S102), durch eine erste Basisstation (1000, 2000), erster Informationen, die durch einen Netzknoten (3000) gesendet werden (S101), wobei der Netzknoten (3000) eine Mobilitätsverwaltungsentität, MME (Mobility Management Entity), oder eine zweite Basisstation umfasst, wobei die ersten Informationen eine erste Trägerkennung und dedizierte Informationen umfassen und die dedizierten Informationen angeben, dass ein erster Träger, der der ersten Trägerkennung entspricht, einen "Handover" zu einem Seitenverbindungsfunkträger unterstützt, und wobei die dedizierten Informationen explizite Indikationsinformationen sind, die ferner ein oder mehrere Elemente der folgenden Informationen umfassen: eine dedizierte Dienstqualitätsklassenkennung, QCI (Quality of service Class Identifier), eine dedizierte Zuordnung-und-Beibehaltung-Priorität- bzw. ARP (Allocation and Retention Priority)-Kennung und eine Dienstkennung, die eine Kennung eines Dienstes ist, der einen "Handover" zu dem Seitenverbindungsfunkträger unterstützt, und
Anweisen, durch die erste Basisstation und basierend auf der ersten Trägerkennung und den dedizierten Informationen, eines Benutzergeräts zum Übergeben des ersten Trägers an den Seitenverbindungsfunkträger.

2. Träger-"Handover"-Verfahren, **dadurch gekennzeichnet, dass** es Folgendes umfasst:
Senden (S101), durch einen Netzknoten (3000), wobei der Netzknoten (3000) eine Mobilitätsverwaltungsentität, MME, oder eine zweite Basisstation umfasst, erster Informationen an eine erste Basisstation (1000, 2000), wobei die ersten Informationen eine erste Trägerkennung und dedizierte Informationen umfassen und die dedizierten Informationen angeben, dass ein erster Träger, der der ersten Trägerkennung entspricht, einen "Handover" zu einem Seitenverbindungsfunkträger unterstützt, und wobei die dedizierten Informationen explizite Indikationsinformationen sind, die ferner ein oder mehrere Elemente der folgenden Informationen umfassen: eine dedizierte Dienstqualitätsklassenkennung, QCI, eine dedizierte Zuordnung-und-Beibehaltung-Priorität- bzw. ARP-Kennung und eine Dienstkennung, die eine Kennung eines Dienstes ist, der einen "Handover" zu dem Seitenverbindungsfunkträger unterstützt.

3. Basisstationsvorrichtung (1000, 2000), **dadurch gekennzeichnet, dass** sie Folgendes umfasst:
eine Empfangseinheit (11), die zum Empfangen erster Informationen konfiguriert ist, die durch einen Netzknoten (3000) gesendet werden, wobei der Netzknoten (3000) eine Mobilitätsverwaltungsentität, MME, oder eine zweite Basisstation umfasst, wobei die ersten Informationen eine erste Trägerkennung und dedizierte Informationen umfassen und die dedizierten Informationen angeben, dass ein erster Träger, der der ersten Trägerkennung entspricht, einen "Handover" zu einem Seitenverbindungsfunkträger unterstützt, und wobei die dedizierten Informationen explizite Indikationsinformationen sind, die ferner ein oder mehrere Elemente der folgenden Informationen umfassen: eine dedizierte Dienstqualitätsklassenkennung, QCI, eine dedizierte Zuordnung-und-Beibehaltung-Priorität- bzw. ARP-Kennung und eine Dienstkennung, die eine Kennung eines Dienstes ist, der einen "Handover" zu dem Seitenverbindungsfunkträger unterstützt; und
eine Sendeeinheit (22), die zum Anweisen, basierend auf der ersten Trägerkennung und den dedizierten Informationen, eines Benutzergeräts zum Übergeben des ersten Trägers an den Seitenverbindungsfunkträger konfiguriert ist.

4. Basisstationsvorrichtung nach Anspruch 3, wobei der Netzknoten (3000) die MME ist, die ersten Informationen ferner eine "Handover"-Anweisung umfassen und die Sendeeinheit speziell zu Folgendem konfiguriert ist:
Anweisen, gemäß der "Handover"-Anweisung, der ersten Trägerkennung und den dedizierten Informationen, des Benutzergeräts zum Übergeben des ersten Trägers, der der ersten Trägerkennung entspricht, an den Seitenverbindungsfunkträger.

5. Netzknoten (3000), wobei der Netzknoten (3000) eine Mobilitätsverwaltungsentität, MME; oder eine zweite Basisstation umfasst, **dadurch gekennzeichnet, dass** er ferner Folgendes umfasst:
eine Sendeeinheit (31), die zum Senden erster Informationen an eine erste Basisstation (1000, 2000) konfiguriert ist, wobei die ersten Informationen eine erste Trägerkennung und dedizierte Informationen umfassen und die dedizierten Informationen angeben, dass ein erster Träger, der der ersten Trägerkennung entspricht, einen "Handover" zu einem Seitenverbindungsfunkträger unterstützt, wobei die dedizierten Informationen explizite Indikationsinformationen sind, die ferner ein oder mehrere Elemente der folgenden Informationen umfassen: eine dedizierte Dienstqualitätsklassenkennung, QCI, eine dedizierte Zuordnung-und-Beibehaltung-Priorität- bzw. ARP-Kennung und eine Dienstkennung, die eine Kennung eines Dienstes ist, der einen "Handover" zu dem Seitenverbindungsfunkträger unterstützt.

## Revendications

1. Procédé de transfert de support, **caractérisé en ce qu'**il comprend :
la réception (S102), par une première station de base (1000, 2000), de premières informations envoyées (S101) par un nœud de réseau (3000), le nœud de réseau (3000) comprenant une entité de gestion de la mobilité, notée MME, ou une deuxième station de base, les premières informations comprenant un premier identifiant de support et des informations dédiées et les informations dédiées indiquant qu'un premier support correspondant au premier identifiant de support prend en charge un transfert vers un support radio de liaison latérale, et les informations dédiées consistant en des informations d'indication explicite qui comprennent en outre un ou plusieurs éléments des informations suivantes : un identifiant de classe de qualité de service, noté QCI, dédié, un identifiant de priorité d'allocation et de rétention, notée ARP, dédié et un identifiant de service consistant en un identifiant d'un service qui prend en charge un transfert vers le support radio de liaison latérale, et
l'instruction donnée, par la première station de base, sur la base du premier identifiant de support et des informations dédiées, à un équipement utilisateur de transférer le premier support vers le support radio de liaison latérale.

2. Procédé de transfert de support, **caractérisé en ce qu'**il comprend :
l'envoi (S101), par un nœud de réseau (3000), le nœud de réseau (3000) comprenant une entité de gestion de la mobilité, notée MME, ou une deuxième station de base, de premières informations à une première station de base (1000, 2000), les premières informations comprenant un premier identifiant de support et des informations dédiées et les informations dédiées indiquant qu'un premier support correspondant au premier identifiant de support prend en charge un transfert vers un support radio de liaison latérale, les informations dédiées consistant en des informations d'indication explicite qui comprennent en outre un ou plusieurs éléments des informations suivantes : un identifiant de classe de qualité de service, noté QCI, dédié, un identifiant de priorité d'allocation et de rétention, notée ARP, dédié et un identifiant de service consistant en un identifiant d'un service qui prend en charge un transfert vers le support radio de liaison latérale.

3. Dispositif station de base (1000, 2000), **caractérisé en ce qu'**il comprend :
une unité de réception (11), configurée pour recevoir des premières informations envoyées par un nœud de réseau (3000), le nœud de réseau (3000) comprenant une entité de gestion de la mobilité, notée MME, ou une deuxième station de base, les premières informations comprenant un premier identifiant de support et des informations dédiées et les informations dédiées indiquant qu'un premier support correspondant au premier identifiant de support prend en charge un transfert vers un support radio de liaison latérale, et les informations dédiées consistant en des informations d'indication explicite qui comprennent en outre un ou plusieurs éléments des informations suivantes : un identifiant de classe de qualité de service, noté QCI, dédié, un identifiant de priorité d'allocation et de rétention, notée ARP, dédié et un identifiant de service consistant en un identifiant d'un service qui prend en charge un transfert vers le support radio de liaison latérale ; et
une unité d'envoi (22), configurée pour donner pour instruction, sur la base du premier identifiant de support et des informations dédiées, à un équipement utilisateur de transférer le premier support vers le support radio de liaison latérale.

4. Dispositif station de base selon la revendication 3, dans lequel le nœud de réseau (3000) consiste en la MME, les premières informations comprennent en outre une instruction de transfert et l'unité d'envoi est plus particulièrement configurée pour :
donner pour instruction, selon l'instruction de transfert, le premier identifiant de support et les informations dédiées, à l'équipement utilisateur de transférer le premier support correspondant au premier identifiant de support vers le support radio de liaison latérale.

5. Nœud de réseau (3000), le nœud de réseau (3000) comprenant une entité de gestion de la mobilité, notée MME, ou une deuxième station de base, **caractérisé en ce qu'**il comprend en outre :
une unité d'envoi (31), configurée pour envoyer des premières informations à une première station de base (1000, 2000), les premières informations comprenant un premier identifiant de support et des informations dédiées et les informations dédiées indiquant qu'un premier support correspondant au premier identifiant de support prend en charge un transfert vers un support radio de liaison latérale, les informations dédiées consistant en des informations d'indication explicite qui comprennent en outre un ou plusieurs éléments des informations suivantes : un identifiant de classe de qualité de service, noté QCI, dédié, un identifiant de priorité d'allocation et de rétention, notée ARP, dédié et un identifiant de service consistant en un identifiant d'un service qui prend en charge un transfert vers le support radio de liaison latérale.
